# FASCICULE DE BREVET EUROPEEN

(11) **EP 2 279 610 B1**
(45) Date de publication et mention de la délivrance du brevet: **12.10.2011**
(21) Numéro de dépôt: 09745663.6
(22) Date de dépôt: 04.05.2009
(51) Int. Cl.: H04N 21/4623

(54) **PROCEDES DE RECEPTION ET D'EMISSION D'UN CONTENU MULTIMEDIA, RECEPTEUR, EMETTEUR ET SUPPORT D'ENREGISTREMENT ET PROCESSEUR DE SECURITE POUR CE PROCEDE**
VERFAHREN FÜR DEN EMPFANG UND DIE ÜBERTRAGUNG EINES MULTIMEDIA-IMHALTSTEILS, EMPFÄNGER, SENDER UND SPEICHERMEDIUM SOWIE SICHERHEITSPROZESSOR FÜR DIESES VERFAHREN
METHODS FOR RECEIVING AND TRANSMITTING A PIECE OF MULTIMEDIA CONTENT, RECEIVER, TRANSMITTER, AND STORAGE MEDIUM, AND SECURITY PROCESSOR FOR SAID METHOD

(30) Priorité: 16.05.2008 FR 0802639
(43) Date de publication de la demande: 02.02.2011
(73) Titulaire: Viaccess, 92057 Paris La Défense (FR)
(72) Inventeur: DUBROEUCQ, Gilles, F-28130 Saint Piat (FR)
(74) Mandataire: Colombo, Michel
(86) Numéro de dépôt international: PCT/EP2009/055325
(87) Numéro de publication internationale: WO 2009/138330

(56) Documents cités:
- EP-A- 1 111 924
- EP-A- 1 641 263
- EP-A- 1 968 316
- WO-A-02/19710
- WO-A-2007/018091
- WO-A-2007/148512
- FR-A- 2 872 662
- US-A1- 2006 294 547
- US-A1- 2007 294 773

## Description

L'invention concerne un procède de réception et un procédé d'émission d'un premier contenu multimédia dont la visualisation est conditionnée à la visualisation au préalable de seconds contenus multimédias. L'invention a également pour objet un récepteur, un émetteur, un support d'enregistrement d'informations et un processeur de sécurité pour la mise en oeuvre de ces procédés.

Un contenu multimédia est un contenu contenant de l'audio et/ou de la vidéo. Ce contenu multimédia est par exemple destiné à être joué sur un poste de télévision. Par exemple, un contenu multimédia est un film, un programme audiovisuel ou une musique.

Un tel procédé de réception est connu de la demande de brevet US 2007 294 773 au nom de Microsoft®. Plus précisément, la demande de Microsoft décrit un procédé de réception d'un premier contenu multimédia, c'ést-à-dire ici d'une vidéo à là demande, et le conditionnement du désembrouillage de cette vidéo à la demande à la visualisation au préalable d'un second contenu multimédia, c'ést-à-dire ici de publicités. La vidéo à la demande est plus connue sous l'acronyme de VOD (Video On Demand).

Dans le procédé de Microsoft, un récepteur délivre une licence permettant le déchiffrement de la vidéo à la demande uniquement l'ensemble des publicités a d'abord été visualisé. Par ce biais, la visualisation de la vidéo à la demande est conditionnée à la visualisation au préalable des publicités. De plus, ce récepteur est équipé de différents moyens permettant d'empêcher l'utilisateur de court-circuiter ou de zapper les publicités. Par exemple, le récepteur est équipé de moyens permettant d'annuler l'avance rapide.

Ce procédé connu permet donc d'obliger les téléspectateurs à visualiser l'ensemble des publicités précédant immédiatement la Vidéo à la demande.

Toutefois, le domaine d'application de ce procédé connu est limité à la vidéo à la demande. En effet, si ce procédé. était transposé à la télévision diffusée, alors un spectateur qui, par inadvertance, raterait le début des publicités qui précédent immédiatement l'émission qu'il souhaite regarder, se verrait privé de la possibilité de visualiser cette émission. Un tel fonctionnement est inacceptable pour un système de télévision diffusée.

On désigne ici par télévision diffusée la diffusion simultanée d'un même contenu multimédia à de multiples récepteurs. Contrairement à la vidéo à la demande, dans la télévision diffusée, l'utilisateur ne peut pas décider de l'heure de début de diffusion du contenu multimédia.

De l'état de la technique est également divulgué dans US2006/294547 et EP1 111 924 A.

L'invention a donc pour objet de proposer un procédé de réception conforme à la revendication 1

Nous supposons ici que le procédé ci-dessus est mis en oeuvre dans le domaine de la télévision diffusée pour une émission de télévision que l'on souhaite conditionner au préalable à la visualisation de publicités. Nous supposons aussi que les instructions de progression incrémentent la valeur du compteur lorsqu'elles sont exécutées par le récepteur. Dans ce contexte, même si l'utilisateur rate le début des publicités qui précédent immédiatement cette émission de télévision, il peut quant même être autorisé à la regarder. En effet, dans le procédé ci-dessus, à chaque fois que l'utilisateur regarde des publicités, la valeur du compteur est incrémentée. Il n'est pas nécessaire que les publicités regardées précédent immédiatement l'émission de télévision puisque la valeur du compteur est mémorisée. Par exemple, l'utilisateur peut regarder une première séquence de publicités puis changer de chaîne pour regarder un film. La visualisation de ce film ne modifie pas la valeur du compteur. Puis quelques temps plus tard, l'utilisateur regarde une autre séquence de publicités ce qui continue d'incrémenter la valeur du compteur. Le compteur est donc incrémenté sans être réinitialisé même si la visualisation des publicités est entrecoupée par la visualisation d'autres contenus multimiédias. Dès lors, avant même qu'il commence à regarder la séquence de publicités qui précède immédiatement l'émission de télévision qu'il souhaite regarder, la valeur du compteur peut déjà avoir atteint une valeur suffisante pour autoriser la visualisation de cette émission de télévision. Dans ces conditions, même s'il rate la séquence de publicités qui précède immédiatement l'émission de télévision, il est quand même autorisé à la regarder.

Dans le procédé ci-desssus il n'est pas nécessaire que le second contenu multimédia précède immédiatement le premier contenu multimédia. Ceci rend possible l'utilisation de ce procédé dans le domaine de la télévision diffusée.

Les modes de réalisation de ce procédé de réception peuvent comporter une ou plusieurs des caractéristiques des revendications dépendantes :
Les modes de réalisation du procédé de réception ci-dessus présentent en outre les avantages suivants :
   - le multiplexage des seconds contenus multimédias et des instructions de progression permet d'associer simplement ces instructions de progression aux seconds contenus multimédias,
   - l'utilisation d'un identifiant de compteur permet d'utiliser simultanément plusieurs compteurs associés à des contenus multimédias respectifs et donc, par exemple, de conditionner la visualisation d'un troisième contenu multimédia à la visualisation au préalable de quatrièmes contenus multimédias, les troisième et quatrièmes contenus multimédias étant distincts et indépendants des premier et seconds contenus multimédias,
   - conditionner la modification de la valeur du compteur au desembrouillage d'une ou plusieurs crypto-périodes permet d'accroître la sécurité du système,
   - modifier la valeur du compteur dans un sens opposé aux instructions de progression lors de chaque visualisation d'un premier contenu multimédia permet de conditionner à nouveau la visualisation d'un prochain premier contenu multimédia à la visualisation au préalable de seconds contenus multimédias supplémentaires,
   - la modification de la valeur du compteur en fonction de l'instruction de régression au fur et à mesure que le premier contenu multimédia est visualisé autorise une durée de visualisation du premier contenu multimédia qui est fonction de la quantité de seconds contenus multimédias déjà visualisés,
   - une inscription d'un titre d'accès autorisant la visualisation complète du premier contenu multimédia lorsqu'un seuil prédéterminé est atteint par la valeur du compteur autorise la visualisation du premier contenu multimédia pendant une durée prédéterminée,
   - imposer une limite maximale à la valeur du compteur permet d'imposer une alternance entre la visualisation des seconds contenus multimédias et des premiers contenus multimédia ;
   - créer automatiquement le compteur en réponse à la réception d'instructions de progression de ce compteur évite d'avoir à initialiser ce compteur lors de la mise en service du récepteur ou à partir de commandes spécifiques émises par l'émetteur.

L'invention a également pour objet un support d'enregistrement d'informations comportant des instructions pour l'exécution du procédé ci-dessus lorsque ces instructions sont exécutées par un calculateur électronique.

L'invention a également pour objet un procédé d'émission conforme à la revendication 11.

Les modes de réalisation de ce procédé d'émission peuvent comporter la caractéristique de la revendication 12.

L'invention a également pour objet un récepteur conforme à la revendication 13.

L'invention a également pour objet un processeur conforme à la revendication 14.

Enfin, l'invention a également pour objet un émetteur conforme à la revendication 15.

L'invention sera mieux comprise à la lecture de la description qui va suivre donnée uniquement à titre d'exemple non limitatif et faite en se référant aux dessins sur lesquels :
- la figure 1 est une illustration schématique de l'architecture d'un système de diffusion de contenus multimédias embrouillés,
- la figure 2 est une illustration schématique d'une grille des programmes utilisée dans le système de la figure 1,
- la figure 3 est une illustration schématique de l'architecture d'un compteur utilisé dans le système de la figure 1,
- la figure 4 est un organigramme d'un procédé d'émission et de réception de premiers contenus multimédias dont la visualisation est conditionnée à la visualisations au préalable de seconds contenus multimédias,
- la figure 5 est une illustration schématique de l'architecture d'un message ECM_{CP} utilisé dans le système de la figure 1,
- la figure 6 est une illustration schématique d'un message ECM_{CNP} utilisé dans le système de la figure 1,
- la figure 7 est une illustration schématique de chronogramme montrant l'évolution de la valeur d'un compteur lorsque le procédé de la figure 4 est appliqué,
- la figure 8 est une illustration schématique de l'architecture d'un autre mode de réalisation d'un message ECM_{CP},
- la figure 9 est un organigramme d'un autre mode de réalisation d'un procédé d'émission et de réception de premier contenu multimédia dont la visualisation est conditionnée à la visualisation au préalable d'autres contenus multimédias, et
- la figure 10 est une illustration schématique de l'architecture d'un message ECM_{CNP} utilisé dans le procédé de la figure 9.

Sur ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie le lecteur peut se reporter au document suivant :

« Fonctionnal Model of Conditional Access System » EBU Review - Technical European Broadcasting Union, Brussels, BE, n° 266, 21 décembre 1995.

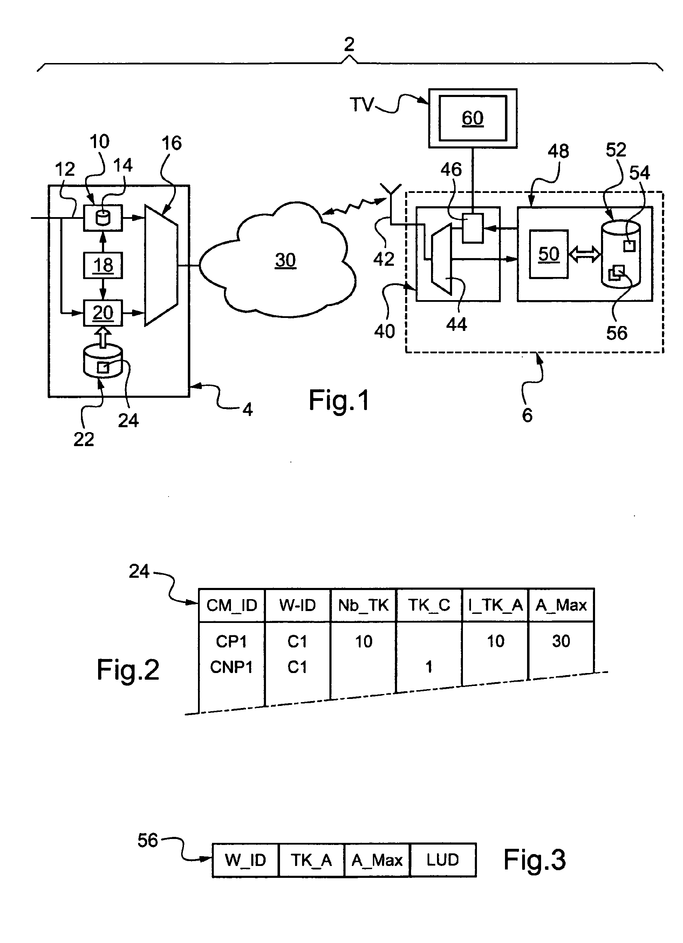

La figure 1 représente un système 2 de diffusion payante de contenus multimédias. Par exemple, le système 2 est un système permettant de diffuser plusieurs chaînes de télévision embrouillées. Le désembrouillage de chacune de ces chaînes de télévision ou groupes de chaînes de télévision est généralement conditionné au paiement d'un abonnement par des abonnés.

Le système 2 comprend au moins un émetteur 4 de contenus multimédias embrouillés et une multitude de récepteurs aptes à désembrouiller les contenus multimédias diffusés par l'émetteur 4. Pour simplifier la figure 1, seul un récepteur 6 a été représenté. Par exemple, les autres récepteurs sont identiques au récepteur 6.

L'émetteur 4 comprend un embrouilleur 10 apte à embrouiller à l'aide d'un mot de contrôle CW des contenus multimédias reçus en clair par l'intermédiaire d'un port 12 au fur et à mesure qu'ils sont reçus. A cet effet, l'embrouilleur 10 utilise le mot de contrôle contenu dans une mémoire 14. Le contenu multimédia embrouillé est transmis à l'entrée d'un multiplexeur 16.

L'embrouillage du contenu multimédia est une opération de chiffrement et le mot de contrôle est la clé de chiffrement utilisée pour embrouiller le contenu multimédia.

L'émetteur 4 comprend également un générateur 18 de mots de contrôle. Le générateur 18 modifie régulièrement le mot de contrôle contenu dans la mémoire 14. L'intervalle de temps entre deux modifications du mot de contrôle utilisé pour embrouiller un contenu multimédia est appelé « crypto-période ».

Un générateur 20 génère un nouveau message ECM (Entitlement Control Message) à chaque fois que le générateur 18 génère un nouveau mot de contrôle. Chaque message ECM comprend en outre :
- un cryptogramme CW* du mot de contrôle, et
- des conditions d'accès au contenu multimédia embrouillé.

Le cryptogramme CW* est une information nécessaire, mais insuffisante à elle seule, pour désembrouiller le contenu multimédia. Par exemple, le cryptogramme CW* est obtenu en chiffrant le mot de contrôle avec une clé d'exploitation connue du récepteur ou une référence à un mot de contrôle ou à un cryptogramme du mot de contrôle contenu dans le récepteur.

Les conditions d'accès sont destinées à être comparées à des titres d'accès ou droit d'accès préenregistrés dans le récepteur. Le désembrouillage du contenu multimédia est uniquement autorisé si les conditions d'accès auxquels il est associé correspondent à des titres d'accès préenregistrés. Par exemple, une condition d'accès peut être un niveau moral associé au contenu multimédia.

Le message ECM généré par le générateur 20 est transmis à l'entrée du multiplexeur 16.

Ici, le générateur 20 est raccordé à une mémoire 22 contenant une grille 24 des programmes.

Le multiplexeur 16 permet de multiplexer le contenu multimédia embrouillé avec les messages ECM contenant les cryptogrammes CW* nécessaires au désembrouillage de ce contenu multimédia. Le multiplexeur 16 crée ainsi un flux de données multiplexées diffusés vers l'ensemble des récepteurs par l'intermédiaire d'un réseau 30 de transmission d'informations. Ce multiplexage permet de synchroniser temporellement l'émission des messages ECM à l'émission du contenu multimédia embrouillé.

Par exemple, le réseau 30 est un réseau à commutation de paquets tel que Internet ou un réseau de diffusion de télévision par satellites.

Le récepteur 6 comprend un décodeur 40 muni d'une antenne 42 pour recevoir les contenus multimédias diffusés par l'émetteur 4. Le décodeur 40 comprend également un démultiplexeur 44 qui démultiplexe les flux de données multiplexées reçus afin de transmettre le contenu multimédia embrouillé à un désembrouilleur 46 et les messages ECM à un processeur 48 de sécurité.

Le processeur 48 est raccordé de façon détachable au décodeur 40. Par exemple, le processeur 48 est une carte à puce.

Ce processeur 48 comprend un calculateur électronique 50 apte à traiter chaque message ECM pour déchiffrer le cryptogramme CW* et obtenir le mot de contrôle CW permettant de désembrouiller le contenu multimédia. Le processeur 48 est apte à transmettre au désembrouilleur 46 le mot de contrôle CW.

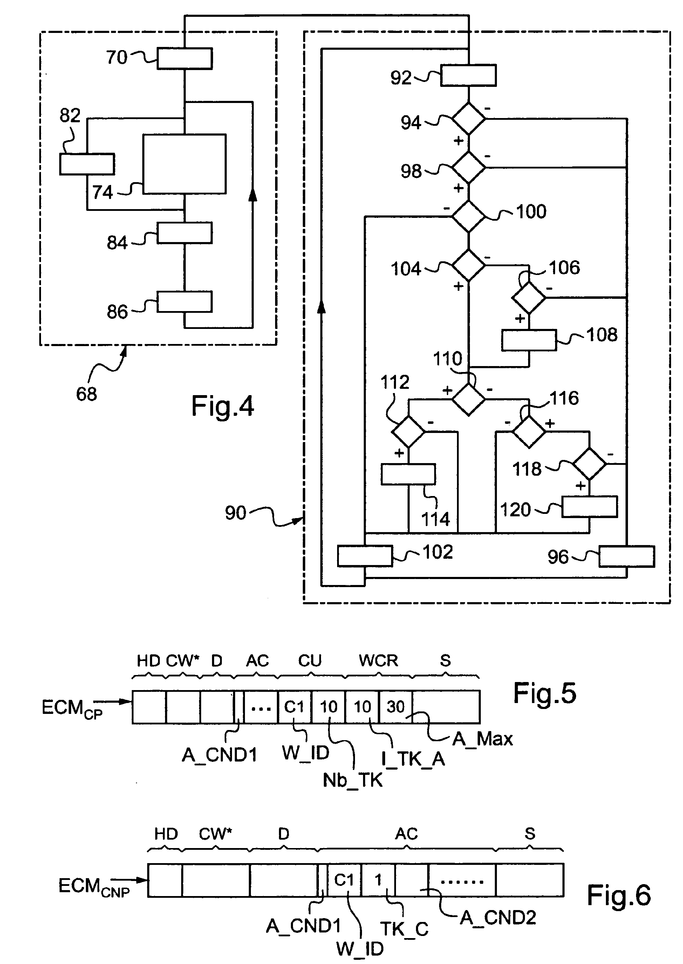

Le calculateur 50 est raccordé à une mémoire 52 contenant des instructions pour l'exécution du procédé de la figure 4 lorsqu'il exécute ces instructions. De plus, ici, cette mémoire 52 comporte des titres d'accès 54 préenregistrés et plusieurs compteurs. Sur la figure 1 seul un compteur 56 a été représenté. La structure et l'utilisation des autres compteurs se déduit de la description faite ci-dessous dans le cas particulier du compteur 56.

Le récepteur 6 est raccordé à un poste 60 de télévision propre à afficher le contenu multimédia désembrouillé par le décodeur 40.

La figure 2 représente un exemple de structure de la grille 24. Cette grille est ici une table contenant les colonnes suivantes :
- une colonne CM-ID destinée à contenir un identifiant d'un contenu multimédia,
- une colonne W-ID destinée à contenir un identifiant d'un compteur du récepteur 6,
- une colonne Nb-TK destinée à contenir un nombre de pas d'incrément de la valeur du compteur,
- une colonne TK-C destinée à contenir un nombre de pas de décrément de la valeur actuelle du compteur,
- une colonne I-TK-A destinée à contenir l'identifiant du compteur à créer, et
- une colonne A-Max destinée à contenir un seuil maximal pour la valeur du compteur.

Les pas d'incrément ou de décrément peuvent également être appelés « points » ou « jetons ».

Cette grille 24 permet donc d'associer à un contenu multimédia désigné par l'identifiant de la colonne CM-ID un certain nombre d'informations concernant un compteur à incrémenter, à décrémenter ou à créer dans les récepteurs.

La figure 3 représente un exemple de structure pour le compteur 56. Ici, ce compteur 56 comprend :
- un champ W-ID destiné à contenir l'identifiant du compteur 56,
- un champ TK-A destiné à mémoriser la valeur actuelle du compteur 56,
- un champ A-Max destiné à contenir un seuil maximal pour la valeur du compteur 56, et
- un champ LUD destiné à contenir la date de la dernière mise à jour de la valeur du compteur 56.

Par exemple, la date est exprimée en jour, heure, minute et seconde.

Le fonctionnement du système 2 va maintenant être décrit en regard du procédé de la figure 4 dans le cas particulier où l'on cherche à conditionner la visualisation de contenus non promotionnels à la visualisation au préalable de contenus promotionnels. Par exemple :
- le contenu non promotionnel est un film ou une émission de télévision, et
- le contenu promotionnel est une séquence de publicités.

Le système 2 débute par une phase 68 d'émission des contenus multimédias embrouilles.

Initialement, avant la diffusion des contenus multimédia, lors d'une étape 70, pour chaque contenu multimédia promotionnel ou non promotionnel à diffuser, la grille 24 est complétée à partir d'informations fournies par un opérateur. Plus précisément, pour chaque contenu promotionnel, les colonnes CM-ID, W-ID, Nb-Tk, I-TK-A et A-Max sont renseignées et la colonne TK-C est vide. Par exemple ici, pour chaque contenu promotionnel, les colonnes CM-ID, W-ID, Nb-TK, I-TK-A et A-Max ont, respectivement, les valeurs suivantes CP1, C1, « 10 », « 10 » et « 30 ». L'identifiant CP1 est celui associé à chaque contenu promotionnel et l'identifiant C1 est celui du compteur 56.

Pour chaque contenu non promotionnel, les colonnes CM-ID, W-ID et TK-C sont renseignées et les colonnes Nb-TK, I-TK-A et A-Max sont vides. Ici, les colonnes Nb-TK, I-TK-A et A-Max ont, respectivement, les valeurs suivantes CNP1, C1 et « 1 ». L'identifiant CNP1 est celui associé à chaque contenu non promotionnel.

Ensuite pendant la diffusion de chaque crypto-période d'un contenu multimédia, lors d'une étape 74, le générateur 20 crée un message ECM contenant :
- un cryptogramme CW* du mot de contrôle CW utilisé par l'embrouilleur 14 pour embrouiller le contenu multimédia pendant la prochaine crypto-période,
- éventuellement, la ou les condition(s) d'accès nécessaire(s) pour autoriser le désembrouillage de ce contenu multimédia, et
- éventuellement des instructions de progression ou de régression du compteur 56.

Ici un message ECM contenant des instructions de progression est noté ECM_{CP}. Un message ECM contenant des instructions de régression est noté ECM_{CNP}. Un message ECM qui ne comporte ni instruction de régression ni instruction de progression du compteur 56 est noté ECM_{N}.

Plus précisément, le générateur 20 crée un message ECM_{CP} lorsque le contenu multimédia en cours de diffusion est un contenu multimédia promotionnel.

Un exemple de structure possible pour ce message ECM_{CP} est représenté sur la figure 5. Ce message ECM_{CP} contient les champs suivants :
- un champ HD d'entête du message ECM_{CP} contenant l'ensemble des données permettant l'exploitation de ce message telles que par exemple un indice de clé d'exploitation pour déchiffrer le cryptogramme CW* et/ou un identifiant de zone de service concerné dans le processeur de sécurité,
- un champ CW* contenant le cryptogramme CW* du mot de contrôle CW utilisé pour embrouiller le contenu promotionnel,
- un champ D contenant la date actuelle,
- une zone AC contenant, éventuellement, une ou plusieurs conditions d'accès au contenu promotionnel,
- une zone CU contenant des instructions de progression,
- une zone WCR contenant des instructions de création du compteur, et
- un champ S contenant une signature du message ECM_{CP}.

Typiquement, dans un message ECM_{CP} il n'existe pas de conditions d'accès relatives à la valeur du compteur 56.

La zone CU comprend :
- un champ W-ID destiné à contenir l'identifiant du compteur à incrémenter, et
- un champ Nb-TK contenant le nombre de pas dont doit être incrémenté la valeur du compteur.

Par exemple, le pas d'incrément est égal à « 1 ».

La zone WCR comprend :
- un champ I-TK-A contenant la valeur initial du compteur à créer, et
- un champ A-Max contenant un seuil maximal pour le compteur à créer.

La signature contenu dans le champ S permet de vérifier l'intégrité du message ECM_{CP} lors de sa réception. Par exemple, cette signature est obtenue à l'aide d'un Hash ou d'un MAC (Message Authentication Code) appliqué au contenu du message ECM_{CP}.

Pour compléter la valeur des champs des zones CU et WCR, le générateur 20 utilise l'identifiant du contenu multimédia diffusé et le contenu de la grille 24. Par exemple, ici, les champs W-ID, Nb-TK, I-TK-A et A-Max ont, respectivement, les valeurs suivantes C1, « 10 », « 10 » et « 30 ».

La figure 6 représente un exemple de structure pour un message ECM_{CNP} associé à chaque contenu non promotionnel diffusé. La structure du message ECM_{CNP} est identique à celle du message ECM_{CP} à l'exception du fait :
- qu'il ne comporte pas de zones CU et WCR, et
- que la zone AC contient une condition d'accès fonction de la valeur du compteur 56.

Ici, cette condition d'accès est codée à l'aide des champs suivants :
- un champ A-CND1 destiné à contenir un identifiant de la condition d'accès,
- un champ W-ID destiné à contenir un identifiant du compteur dont la valeur doit être vérifiée, et
- un champ TK-C destiné à contenir des instructions de régression de la valeur du compteur.

Ici, l'instruction de régression correspond à un nombre de pas de décrément dont doit être diminuée la valeur actuelle du compteur. Le pas de décrément est choisi égal à « 1 ».

Comme pour le message ECM_{CNP} les valeurs des champs W-ID et TK-C sont obtenues à l'aide de l'identifiant du contenu non promotionnel et du contenu de la grille 24. Ici, les champs W-ID et TK-C contiennent, respectivement, les valeurs C1 et « 1 ».

La zone AC peut contenir d'autres conditions d'accès. Par exemple, sur la figure 6, le premier champ A-CND2 d'une seconde condition d'accès a été représenté.

La structure d'un message ECM_{N} peut soit être dépourvue de champs contenant des instructions de progression ou de régression de la valeur d'un compteur soit comporter des instructions de progression ou de régression de la valeur d'un compteur différent du compteur 56. La structure du message se déduit donc des structures de messages ECM décrites ci-dessus.

En parallèle de l'étape 74, lors d'une étape 82, chaque crypto-période du contenu multimédia diffusé est embrouillé à l'aide du mot de contrôle CW courant.

Ensuite, lors d'une étape 84, contenu multimédia embrouillé et les messages ECM qui lui sont associés sont multiplexés, pour créer le flux de données multiplexées.

Lors d'une étape 86, ce flux de données multiplexées est diffusé par l'émetteur 4 au travers du réseau 30 à destination des récepteurs.

Les étapes 74, 82, 84 et 86 sont réitérées en boucle pour chaque crypto-période afin de diffuser les crypto-périodes successives des contenus multimédias.

En parallèle, chaque récepteur effectue un phase 90 de réception des contenus multimédias embrouillés.

Initialement, lors d'une étape 92, le décodeur 40 reçoit et démultiplexe le flux de données multiplexées reçu. Le contenu multimédia embrouillé est alors envoyé au désembrouilleur 46 tandis que les messages ECM sont envoyés au processeur 48.

Lors d'une étape 94, le calculateur 50 vérifie la signature S du message ECM reçu. Dans le cas où le message ECM est corrompu, le calculateur 50 procède à une étape 96 d'inhibition du désembrouillage du contenu multimédia. Par exemple, lors de l'étape 96, le processeur 48 inhibe le déchiffrement du cryptogramme CW* de sorte que le désembrouillage du contenu multimédia est rendu impossible. Lors de l'étape 96, la visualisation en clair du contenu multimédia n'est donc pas autorisée.

Dans le cas contraire, lors d'une étape 98, le calculateur 50 compare les conditions d'accès contenues dans le message ECM reçu aux titres d'accès 54. Lors de l'étape 98, les conditions d'accès définies à l'aide du champ TK-C ne sont pas évaluées. Dans le cas où le la mémoire 52 ne comporte aucun titre d'accès correspondant à ces conditions d'accès, alors le calculateur 50 procède à l'étape 96.

Dans le cas contraire, il procède à une étape 100 de vérification de l'existence d'un identifiant de compteur dans le message ECM reçu. Cet identifiant est recherché soit dans le champ W-ID de la zone CU soit dans le champ W-ID de la zone AC.

Dans le cas où le message ECM ne contient aucun identifiant de compteur, alors la visualisation de ce contenu multimédia n'est pas conditionnée à la visualisation au préalable de contenus promotionnels. Par exemple, il s'agit d'un message ECM_{N} dépourvu de zone CU et de conditions d'accès faisant intervenir la valeur d'un compteur. Dans ce cas, il est directement procède à une étape 102 lors de laquelle le calculateur 50 déchiffre le cryptogramme CW* pour obtenir le mot de contrôle CW et le transmet au désembrouilleur 46. Ensuite, le désembrouilleur 46 désembrouille la crypto-période suivante du contenu multimédia reçu à l'aide de ce mot de contrôle et transmet le contenu multimédia désembrouillé au poste 60 qui l'affiche en clair. Ainsi, la visualisation de ce contenu multimédia est autorisée puisque le contenu multimédia est affiché sous une forme directement perceptible et compréhensible pour un utilisateur.

Dans le cas contraire, lors d'une étape 104, le calculateur 50 vérifie si l'identifiant de compteur trouvé lors de l'étape 100 correspond à un compteur déjà existant dans la mémoire 52. Dans la négative, lors d'une étape 106, le calculateur 50 vérifie si une zone WCR existe dans le message ECM reçu. Dans la négative, le processeur 48 procède alors directement à l'étape 96. Dans l'affirmative, lors d'une étape 108, le calculateur 50 crée dans la mémoire 52 un compteur ayant la structure décrite en regard de la figure 3. Les valeurs des champs W-ID, TK-A, A-Max et LUD du compteur créé sont initialisées à partir des valeurs, respectivement, des champs W-ID, I-TK-A, A-Max et D du message ECM reçu. Ainsi, si le compteur 56 n'existait pas encore lors de la première réception d'un contenu non promotionnel, ce compteur est automatiquement créé lors de l'étape 108.

Si le compteur correspondant à l'identifiant contenu dans le champ W-ID existe déjà dans la mémoire 52 ou à l'issu de l'étape 108, le calculateur 50 procède à une étape 110 de vérification de l'existence du champ Nb-TK dans le message ECM reçu.

Dans l'affirmative, le message ECM reçu est un message ECM_{CP}. Alors, lors d'une étape 112, le calculateur 50 vérifie que la date contenue dans le champ LUD de ce compteur est antérieure à la date contenue dans le champ D du message ECM reçu.

Dans l'affirmative, lors d'une étape 114, le calculateur 50 incrémente la valeur contenue dans le champ TK-A de ce compteur 56 du nombre de pas indiqué dans le champ Nb-TK du message ECM reçu. Si nécessaire, lors de l'étape 114, le calculateur 50 limite l'incrémentation de la valeur du compteur pour ne pas dépasser le seuil indiqué dans le champ A-Max. La nouvelle valeur du compteur est alors mémorisé jusqu'à la prochaine itération de l'étape 114.

Lors de l'étape 114, le champ LUD du compteur 56 est également mis à jour à partir de la date contenue dans le champ D du message ECM reçu.

A l'issu de l'étape 114 ou si la dernière date de mise à jour du compteur 56 est postérieure à la date contenue dans le message ECM reçu, le processeur procède directement à l'étape 102.

Dans le cas où le champ Nb-TK n'existe pas dans le message EMC reçu, c'est que ce message est un message ECM_{CNP}. Le calculateur 50 procède alors à une étape 116 de vérification de l'existence du champ TK-C dans la zone AC du message ECM reçu. Si le message ECM reçu contient effectivement ce champ, alors cela signifie que le contenu multimédia actuellement diffusé est un contenu multimédia dont la visualisation est conditionnée à la visualisation au préalable d'autres contenus multimédias.

Dans ce cas, lors d'une étape 118, le calculateur 50 vérifie que la valeur actuelle du compteur identifié lors de l'étape 100 est supérieure à la valeur contenue dans le champ TK-C. Dans la négative, il est directement procédé à l'étape 96 ce qui interdit la visualisation de ce contenu multimédia.

Dans le cas contraire, lors d'une étape 120, le calculateur 50 décrémente la valeur actuelle du compteur identifié d'un nombre de pas défini par la valeur contenue dans le champ TK-C du message ECM reçu. Lors de l'étape 120, la date contenue dans le champ LUD du compteur est également remplacée par la date contenue dans le message ECM reçu.

A l'issu de l'étape 120 ou si lors de l'étape 116, le message ECM ne contient pas le champ TK-C, il est directement procédé à l'étape 102.

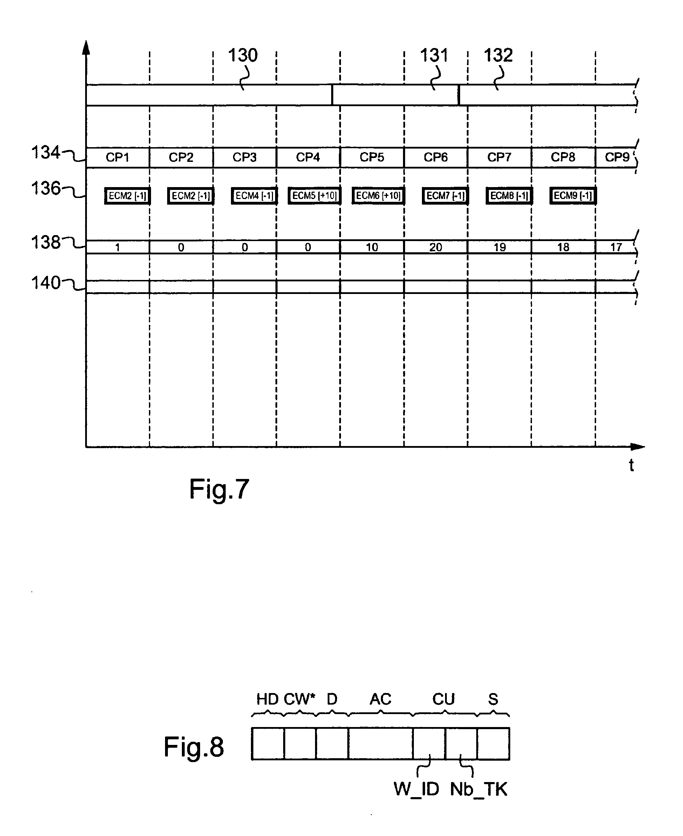

La figure 7 donne un exemple d'évolution de la valeur du compteur 56.

Sur la figure 7, la bande du haut représente la succession temporelle d'un contenu non promotionnel 130, d'un contenu promotionnel 131 et d'un contenu non promotionnel 132.

Une bande 134 représente huit crypto-périodes CP1 à CP8 successives qui couvrent la plage temporelle pendant laquelle les contenus 130 à 132 sont reçus.

Une bande 136 représente les instants d'émission des messages ECM. Ici, chaque message ECM est transmis au récepteur pendant la crypto-période qui précède la crypto-période du contenu multimédia auquel il est associé. Ainsi, les messages ECM2 à ECM9 sont associés, respectivement, aux crypto-période CP2 à CP9. La valeur entre crochets représente la valeur contenue dans le champ TK-C du message ECM lorsque celle-ci est négative ou la valeur contenue dans le champ Nb-TK lorsque celle-ci est positive. On constate donc que les messages ECM5 et ECM6 sont des messages ECM_{CP} associés aux contenus 131. Les autres messages représentés sont des messages ECM_{CNP}.

Une bande 138 représente la valeur du champ TK-A du compteur 56. Une bande 140 indique en gris les crypto-périodes pendant lesquelles la visualisation des contenus non promotionnels est possible et en noir les crypto-périodes ou une telle visualisation n'est pas possible.

Plus précisément, pendant la crypto-période CP1, la valeur du compteur 56 est égale à « 1 ». Par conséquent, le désembrouillage du contenu multimédia pendant la crypto-période CP 2 est autorisé car le champ TK-C du message ECM2 est égal à « 1 ». Le traitement du message ECM2 pendant la crypto-période CP1 conduit à décrémenter la valeur du compteur 56 de « 1 » de sorte que cette valeur est de « 0 » pendant la crypto-période CP2.

Ensuite, lors de la crypto-période CP2, la valeur du champ TK-C du message ECM3 est comparée à la valeur actuelle du compteur 56. Cette fois-ci, la valeur du compteur 56 est inférieure à la valeur du champ TK-C. Par conséquent, le désembrouillage du contenu multimédia non promotionnel est interdit pendant la crypto-période suivante CP3. Dans cet exemple, l'exécution du procédé de la figure 4 conduit aussi à interdire la visualisation du contenu 130 pendant la crypto-période CP4.

Pendant la crypto-période CP4, le calculateur 50 reçoit le message ECM5 dans lequel la valeur du champ Nb-TK est égale à « 10 ». Par conséquent, la valeur du compteur 56 est incrémentée de 10 et la visualisation du contenu 131 est autorisée pendant la crypto-période CP5.

Pendant la crypto-période suivante CP5, un autre message ECM_{CP} est reçu de sorte que la valeur du compteur 56 est de nouveau incrémentée de « 10 ».

Ensuite, pour désembrouiller le contenu 132, seules des messages ECM_{CNP} sont reçus. Ainsi, la valeur du compteur 56 est décrémentée de « 1 » à la fin de chacune des crypto-périodes CP6 et CP7. Toutefois, la visualisation du contenu 132 est autorisé pendant les crypto-périodes CP7 et CP8 car la valeur du compteur 56 est supérieure à la valeur contenue dans le champ TK-C des messages ECM7 et ECM8.

On comprend donc que le procédé de la figure 4 autorise une durée de visualisation d'un contenu non promotionnel qui est fonction de la durée de contenus promotionnels visualisés au préalable. Par exemple, ici la durée de visualisation autorisée de contenu non promotionnel est directement proportionnelle à la durée des contenus promotionnels visualisés. Ce procédé incite donc les utilisateurs à visualiser les contenus promotionnels tout en laissant une grande flexibilité à l'utilisateur pour accumuler et dépenser les points dans son compteur.

La figure 8 représente un autre mode de réalisation possible pour la structure d'un message ECM_{CP}. Dans ce mode de réalisation, le message ECM_{CP} est identique à celui décrit en regard de la figure 5 à l'exception qu'il ne comporte pas la zone WCR. Ainsi, dans ce mode de réalisation, les compteurs tels que le compteur 56 doivent être initialisés dans la mémoire 52 soit lors de l'émission ou de la fabrication du processeur 48 soit à l'aide de messages EMM (Entitlement Management Message).

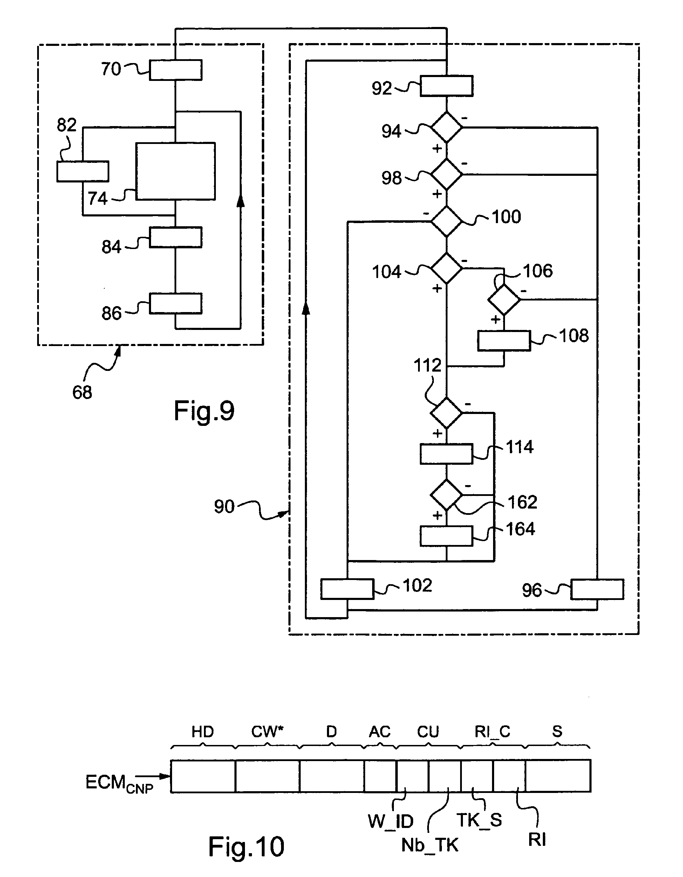

Un autre mode de réalisation du procédé de la figure 4 va maintenant être décrit en regard des figures 9 et 10.

Le procédé de la figure 9 est identique au procédé de la figure 4 à l'exception du fait que :
- lors de l'étape 74, la structure du message ECM_{CP} créée est celle représentée sur la figure 10,
- les étapes 110, 116, 118 et 120 sont supprimées, et
- des étapes 162 et 164 sont introduites après l'étape 114.

La structure du message ECM_{CP} représentée sur la figure 10 est identique à celle du message ECM_{CP} représentée sur la figure 5 à l'exception du fait que la zone WCR est remplacée par une zone RI-C. La zone RI-C contient des instructions pour l'inscription dans la mémoire 52 d'un nouveau titre d'accès si la valeur du compteur dépasse un seuil prédéterminé S₁. Ce nouveau titre d'accès correspond à une condition d'accès au contenu non promotionnel. Plus précisément, la zone RI-C contient :
- un champ TK-S destiné à contenir la valeur du seuil S₁, et
- un champ RI contenant le titre d'accès à inscrire dans la mémoire 52 lorsque le seuil S₁ est atteint.

De préférence, dans ce mode de réalisation, le message ECM_{CNP} est dépourvu d'instructions de régression. Ainsi, la structure du message ECM_{CNP} ne se distingue en rien de celle d'un message ECM conventionnel.

Après avoir incrémenté la valeur du compteur lors de l'étape 114, lors de l'étape 162, le calculateur 50 vérifie si la nouvelle valeur du compteur a atteint le seuil S₁ contenu dans le champ TK-S. Dans la négative, il est directement procédé à l'étape 102. Dans l'affirmative, lors de l'étape 164, le calculateur 50 inscrit le titre d'accès contenu dans le champ RI dans la mémoire 52. Ensuite, toujours lors de l'étape 164, la valeur du compteur 56 est réinitialisée. Par exemple, la valeur du compteur est remise à zéro ou décrémentée de la valeur S₁. Plutôt que de réinitialiser la valeur du compteur, il est également possible d'incrémenter la valeur du seuil S₁ d'un pas prédéterminé.

Dans ce mode de réalisation, chaque contenu non promotionnel est associé à une condition d'accès A-CND. Tant que la mémoire 52 ne comporte pas de titre d'accès correspondant à cette condition d'accès, la visualisation du contenu non promotionnel est interdite. Lorsque la valeur du compteur atteint le seuil S₁ alors un titre d'accès correspondant à cette condition A-CND est automatiquement inscrit dans la mémoire 52. Dès lors la visualisation du prochain contenu non promotionnel reçu est autorisée. Comme dans le mode de réalisation de la figure 4, cela incite les utilisateurs à visualiser les contenus promotionnels. De plus, l'inscription d'un titre d'accès permet de régler précisément la durée de contenu non promotionnel visualisable. Par exemple, le nouveau titre d'accès inscrit dans la mémoire 52 autorise la visualisation de la chaîne du jour et du lendemain uniquement.

De nombreux autres modes de réalisation sont possibles. Par exemple, la visualisation du contenu multimédia non promotionnel peut être empêchée par d'autres moyens que l'embrouillage de ce contenu. Dans ce cas, les procédés décrits ci-dessus peuvent être appliqués dans un contexte où les premiers et seconds contenus multimédias ne sont pas embrouillés.

En variante, l'antenne 42 est remplacée par un adaptateur réseau lorsque le décodeur reçoit les contenus multimédia par l'intermédiaire d'un câble. Par exemple, le câble est un câble Ethernet.

Ici, l'identifiant du compteur permet d'utiliser et de mettre en oeuvre les procédés des figures 4 et 9 pour plusieurs contenus multimédias non promotionnels distincts de façon à soumettre la visualisation de l'un de ces contenus multimédias non promotionnels à la valeur d'un compteur particulier. Dans un mode de réalisation particulier, l'identifiant de compteur peut être fonction du numéro de la chaîne visualisée.

Toutefois, en variante, un seul compteur peut être utilisé pour tous les contenus non promotionnels. Dans ce cas, l'identifiant du compteur peut être omis.

Les procédés des figures 4 et 9 peuvent être modifiés pour n'autoriser l'incrémentation du compteur que lorsqu'un groupe de plusieurs crypto-périodes consécutives du contenu promotionnel a entièrement été visualisé. A cet effet, un message ECM comporte une indication du début d'un groupe de crypto-périodes puis un message ECM ultérieur diffusé à la fin de ce groupe de crypto-périodes comporte une indication de fin du groupe de crypto-périodes. De plus, un identifiant de groupe de crypto-période et un compteur de continuité des crypto-périodes du groupe sont insérés dans chaque message ECM reçu pendant ce groupe de crypto-périodes. A partir de ces informations, le calculateur 50 vérifie que les crypto-périodes de ce groupe ont toutes été reçues immédiatement les unes après les autres. Dans l'affirmative, la valeur du compteur est incrémentée du nombre de pas indiqué dans le champ Nb-TK. Dans la négative, c'est-à-dire si l'une des crypto-périodes n'a pas été désembrouillée, la valeur du compteur reste inchangée. En synchronisant temporellement ce groupe de crypto-périodes avec un contenu promotionnel, il est possible d'inciter l'utilisateur à regarder l'ensemble du contenu promotionnel sans changer de chaîne au milieu.

Une autre méthode pour soumettre l'incrémentation du compteur 56 à la visualisation d'un segment entier de contenu promotionnel s'étendant sur plusieurs crypto-périodes consiste à signaler le début et la fin de ce groupe de crypto-périodes et à ajouter dans chaque message ECM associé à ce groupe un fragment de signature d'un message EMM local contenant la date, l'identifiant du compteur et la valeur du champ Nb-TK dont doit être incrémenté ce compteur. Avant d'incrémenter le compteur correspondant à l'identifiant contenu dans ce message EMM construit localement par le récepteur, le calculateur 50 vérifie la signature de ce message en la comparant à la signature obtenue en concaténant l'ensemble des fragments de signature contenus dans les messages ECM associés à ce groupe. Dans le cas où les deux signatures correspondent, l'incrémentation de la valeur du compteur est autorisée et dans le cas contraire elle est interdite.

Dans les messages ECM, la zone AC peut être omise si le contenu promotionnel est en libre accès.

Les instructions de progressions associées aux contenus promotionnels ont été décrites dans le cas particulier où elles correspondent à un pas d'incrément constant par cryptopériode. Ainsi, l'incrémentation du compteur est directement proportionnelle au nombre de cryptopériodes de contenus promotionnels visualisés. En variante, le pas d'incrément n'est pas constant et peut varier entre deux cryptopériodes de contenus promotionnels.

Ici, le compteur a été décrit dans le cas particulier où sa valeur est incrémentée lorsqu'un contenu promotionnel est visualisé et décrémenté lorsqu'un contenu non promotionnel est visualisé. Dans un autre mode de réalisation, les sens de variation de la valeur de ce compteur sont opposés c'est-à-dire que le compteur est décrémenté lorsque des contenus promotionnels sont visualisés et incrémenté lorsqu'un contenu non promotionnel est visualisé.

Il est possible de remplacer l'opération d'incrémentation de la valeur du compteur par une opération d'incrémentation de la valeur du seuil prédéterminé au-delà duquel la visualisation du contenu multimédia non promotionnel est autorisée.

Le pas d'incrément ou de décrément n'est pas nécessairement un entier. Il peut s'agir d'un nombre rationnel ou d'un nombre réel.

Ce qui a été décrit dans le cas particulier de la gestion de clés de chiffrement à l'aide de messages ECM et EMM s'applique à tout procédé de gestion de clés impliquant l'envoi de cryptogrammes du mot de contrôle utilisé pour émettre les contenus multimédias.

Le compteur n'est pas nécessairement enregistré dans la mémoire du processeur de sécurité. Par exemple, en variante, la valeur du compteur est enregistrée dans le décodeur sous forme chiffrée à l'aide d'une clé contenue dans le processeur de sécurité.

Le processeur 48 peut être intégré de façon inamovible dans le décodeur ou dans le désembrouilleur. A l'inverse, le désembrouilleur peut être détachable.

Ce qui a été décrit ci-dessus peut également s'appliquer pour conditionner la visualisation d'un contenu non promotionnel à la visualisation au préalable d'un certain nombre de fois d'un même contenu promotionnel. Dans ce cas, la valeur du compteur est par exemple incrémentée en fonction du nombre de fois où ce contenu promotionnel particulier a été visualisé. La structure des ECM décrite et les procédés ci-dessus restent inchangés, seule l'utilisation des procédés change.

Ce qui a été décrit ci-dessus s'applique également dans le contexte de la vidéo à la demande. Par exemple, les procédés ci-dessus peuvent être mis en oeuvre pour conditionner la visualisation gratuite d'une vidéo à la demande à la visualisation au préalable d'une certaine durée de contenu promotionnel. Dans ce cas, ces contenus promotionnels sont, par exemple, ceux qui sont joués juste avant la vidéo à la demande.

Les premiers et seconds contenus multimédias peuvent être différents, respectivement, de contenus non promotionnels et de contenus promotionnels. Par exemple, les seconds contenus peuvent être des premiers épisodes d'une série télévisée et les premiers contenus multimédias les derniers épisodes de cette série. Ainsi, on incite les utilisateurs à regarder tous les épisodes y compris les premiers. De façon générale, ce qui est décrit ci-dessus n'est pas limité à des types particuliers de premiers et seconds contenus multimédias.

## Revendications

1. Procédé de réception d'un premier contenu multimédia embrouillé dont la visualisation est conditionnée à la visualisation au préalable de seconds contenus multimédias embrouillés, ces seconds contenus multimédias étant les seuls à être associés à des messages de contrôle d'accès contenant un cryptogramme d'un mot de contrôle pour les désembrouiller et des instructions de progression de la valeur d'un même compteur, ces instructions de progression modifiant toutes la valeur de ce même compteur dans le même sens lorsqu'elles sont exécutées par un récepteur électronique des premier et seconds contenus multimédias, **caractérisé en ce que** ce procédé comprend :
- à chaque fois qu'un second contenu multimédia est visualisé à l'aide du récepteur électronique, la modification (114) de la valeur du compteur en fonction des instructions de progression associées à ce second contenu multimédia,
- la mémorisation (114) de la valeur de ce compteur entre des visualisations non consécutives de seconds contenus multimédias entrecoupées par la visualisation d'un autre contenu multimédia ne modifiant pas la valeur du compteur,
- le conditionnement (118 ; 98) de la visualisation du premier contenu multimédia à une valeur prédéterminée du compteur, et
- à chaque fois que la visualisation du premier contenu multimédia à l'aide du récepteur électronique est autorisée, le procédé comprend la modification (120 ; 164) de la valeur du compteur dans un sens opposé aux instructions de progression.

2. Procédé selon la revendication 1, dans lequel avant la visualisation de chaque second contenu multimédia, le procédé comprend le démultiplexage (92) d'un flux de données multiplexées reçu contenant le second contenu multimédia multiplexé avec les instructions de progression et dans lequel la modification de la valeur du compteur est fonction des instructions de progression multiplexées avec ce second contenu multimédia.

3. Procédé selon l'une quelconque des revendications précédentes, dans lequel le procédé comprend la sélection (112) du compteur dont la valeur doit être modifiée parmi plusieurs compteurs possibles en fonction d'un identifiant de ce compteur associé aux instructions de progression.

4. Procédé selon l'une quelconque des revendications précédentes, dans lequel le procédé comprend :
- la réception (92) d'un groupe d'une ou plusieurs crypto-périodes du second contenu multimédia et d'instructions de progression associées à ce groupe, chaque crypto-période du second contenu multimédia étant embrouillée avec un mot de contrôle respectif, et
- la modification (114) de la valeur du compteur à chaque fois que toutes les crypto-périodes de ce groupe sont désembrouillées par le récepteur électronique.

5. Procédé selon la revendication 4, dans lequel avant une crypto-période du second contenu multimédia, le procédé comprend la réception (92) d'un message diffusé simultanément à l'ensemble des récepteurs susceptibles de recevoir les premier et second contenus multimédias, ce message contenant un cryptogramme CW* du mot de contrôle nécessaire pour désembrouiller cette crypto-période et les instructions de progression associées au groupe auquel appartient cette crypto-périodes.

6. Procédé selon l'une quelconque des revendications précédentes, dans lequel le procédé comprend :
- la réception (92) d'un groupe d'une ou plusieurs crypto-périodes du premier contenu multimédia et d'instructions de régression de la valeur du compteur associé à ce groupe, chaque crypto-période étant embrouillée avec un mot de contrôle respectif,
- à chaque fois que toutes les crypto-périodes du groupe sont désembrouillées, la modification (120) de la valeur du compteur en fonction des instructions de régression associées à ce groupe dans un sens opposé aux instructions de progression, et
- l'interdiction (96) du désembrouillage d'un prochain groupe de crypto-périodes du premier contenu multimédia dès que la valeur du compteur atteint un seuil prédéterminé.

7. Procédé selon l'une quelconque des revendications précédentes, dans lequel le procédé comprend :
- la réception (92) du premier contenu multimédia embrouillé et de conditions d'accès à ce premier contenu multimédia,
- l'interdiction (98, 96) du désembrouillage du premier contenu multimédia si aucun titre d'accès correspondant aux conditions d'accès n'est inscrit dans le récepteur électronique, et au contraire,
- l'autorisation (98) du désembrouillage du premier contenu multimédia si un titre d'accès correspondant aux conditions d'accès à ce premier contenu multimédia est inscrit dans le récepteur électronique, et
- l'inscription (164) dans le récepteur d'un titre d'accès correspondant aux conditions d'accès dès que la valeur du compteur a franchi un seuil prédéterminé.

8. Procédé selon l'une quelconque des revendications précédentes, dans lequel le procédé comprend la limitation de la valeur du compteur à un seuil prédéterminé.

9. Procédé selon l'une quelconque des revendications précédentes, dans lequel le procédé comprend la création automatique (108) du compteur en réponse à la réception d'instructions de progression de la valeur de ce compteur.

10. Support d'enregistrement d'informations, **caractérisé en ce qu'**il comporte des instructions pour l'exécution d'un procédé de réception conforme à l'une quelconque des revendications précédentes, lorsque ces instructions sont exécutées par un calculateur électronique.

11. Procédé d'émission d'un premier contenu multimédia embrouillé dont la visualisation est conditionnée à la visualisation au préalable de seconds contenus multimédias embrouillés, ces seconds contenus multimédias étant les seuls à être associés à des messages de contrôle d'accès contenant un cryptogramme d'un mot de contrôle pour les désembrouiller et des instructions de progression de la valeur d'un même compteur d'un récepteur électronique des premier et seconds contenus multimédias, ces instructions de progression modifiant toutes la valeur de ce même compteur dans le même sens lorsqu'elles sont exécutées par le récepteur électronique, **caractérisé en ce que** ce procédé comprend :
- l'émission (86) des messages de contrôle d'accès associés à chaque second contenu multimédia émis,
- l'émission (86) entre deux seconds contenus multimédias d'autres contenus multimédias non associés à des messages de contrôle d'accès contenant des instructions de modification de la valeur de ce compteur, et
- l'émission (86) de conditions d'accès associées au premier contenu multimédia émis, ces conditions d'accès conditionnant la visualisation du premier contenu multimédia à une valeur prédéterminée du compteur.

12. Procédé selon la revendication 11, dans lequel le procédé comprend l'émission (86) d'instructions de régression de la valeur du compteur associées au premier contenu multimédia émis, ces instructions de régression étant propre à augmenter l'écart entre la valeur du même compteur et ladite valeur prédéterminée lorsque la visualisation du premier contenu multimédia est autorisée.

13. Récepteur d'un premier contenu multimédia embrouillé dont la visualisation est conditionnée à la visualisation au préalable de seconds contenus multimédias embrouillés, ces seconds contenus multimédias étant les seuls à être associés à des messages de contrôle d'accès contenant un cryptogramme d'un mot de contrôle pour les désembrouiller et des instructions de progression de la valeur d'un même compteur, ces instructions de progression modifiant toutes la valeur de ce même compteur dans le même sens lorsqu'elles sont exécutées par le récepteur électronique des premier et seconds contenus multimédias, **caractérisé en ce que** ce récepteur comprend :
- une mémoire (52) apte à stocker la valeur du compteur entre des visualisations non consécutives des seconds contenus multimédias entrecoupées par la visualisation d'un autre contenu multimédia ne modifiant pas la valeur du compteur, et
- un calculateur électronique (50) apte :
• à modifier la valeur du compteur en fonction des instructions de progression associées aux seconds contenus multimédias reçus à chaque fois qu'un second contenu multimédia est visualisé à l'aide de ce récepteur,
• à conditionner la visualisation du premier contenu multimédia à une valeur prédéterminée du compteur, et
• à chaque fois que la visualisation du premier contenu multimédia à l'aide du récepteur électronique est autorisée, à modifier la valeur du compteur dans un sens opposé aux instructions de progression.

14. Processeur de sécurité apte à être mis en oeuvre dans un récepteur conforme à la revendication 13, **caractérisé en ce que** ce processeur de sécurité comprend un calculateur électronique (50) apte :
• à modifier la valeur du compteur en fonction des instructions de progression associées aux seconds contenus multimédias reçus à chaque fois qu'un second contenu multimédia est visualisé à l'aide de ce récepteur, et
• à conditionner la visualisation du premier contenu multimédia à une valeur prédéterminée du compteur, et
• à chaque fois que la visualisation du premier contenu multimédia à l'aide du récepteur électronique est autorisée, à modifier la valeur du compteur dans un sens opposé aux instructions de progression.

15. Emetteur d'un premier contenu multimédia embrouillé dont la visualisation est conditionnée à la visualisation au préalable de seconds contenus multimédias embrouillés, ces seconds contenus multimédias étant les seuls à être associés à des messages de contrôle d'accès contenant un cryptogramme d'un mot de contrôle pour les désembrouiller et des instructions de progression de la valeur d'un même compteur d'un récepteur électronique des premier et seconds contenus multimédias, ces instructions de progression modifiant toutes la valeur de ce même compteur dans le même sens lorsqu'elles sont exécutées par le récepteur électronique, **caractérisé en ce que** l'émetteur (4) est apte :
- à émettre les messages de contrôle d'accès associés à chaque second contenu multimédia émis,
- à émettre, entre deux seconds contenus multimédias, d'autres contenus multimédias non associés à des messages de contrôle d'accès contenant des instructions de progression de la valeur de ce compteur, et
- à émettre des conditions d'accès associées au premier contenu multimédia émis, ces conditions d'accès conditionnant la visualisation du premier contenu multimédia à une valeur prédéterminée du compteur.

## Claims

1. Method for receiving a first scrambled multimedia content the viewing of which is conditional on the prior viewing of scrambled second multimedia contents, these second multimedia contents being the only contents to be associated with access control message containing a cryptogram of a control word to descramble them and instructions on progression of the value of a same counter, these instructions on progression modifying all the value of this same counter in the same sense when they are executed by an electronic receiver of the first and second multimedia contents, **characterized in that** this method comprises:
- the modification (114), whenever a second multimedia content is viewed by means of the electronic receiver, of the value of the counter as a function of the instructions on progression associated with this second multimedia content,
- the storage (114) of the value of this counter between non-consecutive viewings of second multimedia contents interspersed with the viewing of another multimedia content that does not modify the value of the counter,
- the making of the viewing of the first multimedia content conditional (118; 98) on a predetermined value of the counter, and
- whenever the viewing of the first multimedia content by means of the electronic receiver is authorized, the method comprises the modification (120; 164) (120; 164) of the value of the counter in a sense opposite to that of the instructions on progression.

2. Method according to claim 1 wherein, before the viewing of each second multimedia content, the method comprises the demultiplexing (92) of a received stream of multiplexed data containing the second multimedia content multiplexed with the instructions on progression and wherein the modification of the value of the counter is a function of the instructions on progression multiplexed with this second multimedia content.

3. Method according to any one of the preceding claims, wherein the method comprises the selection (112) of the counter whose value which must be modified from among several possible counters as a function of an identifier of this counter associated with the instructions on progression.

4. Method according to any one of the preceding claims, wherein the method comprises :
- the reception (92) of a group of one or more crypto-periods of the second multimedia content and instructions on progression associated with this group, each crypto-period of the second multimedia content being scrambled with a respective control word, and
- the modification (114) of the value of the counter whenever all the crypto-periods of this group are descrambled by the electronic receiver;

5. Method according to claim 4 wherein, before a crypto-period of the second multimedia content, the method comprises the reception of a message broadcast simultaneously to all the receivers capable of receiving the first and second multimedia contents, this message containing a cryptogram CW* of the control word needed to descramble this crypto-period and the instructions on progression associated with the group to which this crypto-period belongs.

6. Method according to any one of the preceding claims, wherein the method comprises :
- the reception (92) of a group of one or more crypto-periods of the first multimedia content and of instructions on regression of the value of the counter associated with this group, each crypto-period being scrambled with a respective control word,
- whenever all the crypto-periods the group are descrambled, the modification (120) of the value of the counter as a function of the instructions on regression associated with this group in a sense opposite to that of the instructions on progression, and
- the prohibiting (96) of the descrambling of a following group of crypto-periods of the first multimedia content as soon as the value of the counter reaches a predetermined threshold.

7. Method according to any one of the preceding claims, wherein the method comprises :
- the reception (92) of the first scrambled multimedia content and of conditions of access to this first multimedia content,
- the prohibiting (98, 96) of the descrambling of the first multimedia content if no right of access corresponding to the conditions of access is recorded in the electronic receiver, and on the contrary,
- the authorizing (98) of the descrambling of the first multimedia content if a right of access corresponding to the conditions of access to this first multimedia content is recorded in the electronic receiver, and
- the writing (164) to the receiver of an access right corresponding to conditions of access as soon as the value of the counter has crossed a predetermined threshold.

8. Method according to any one of the preceding claims, wherein the method comprises the limiting of the value of the counter to a predetermined threshold;

9. Method according to any one of the preceding claims, wherein the method comprises the automatic creation (108) of the counter in response to the reception of instructions on progression of the value of this counter.

10. Information-recording carrier **characterized in that** it comprises instructions for executing a method of receiving according to any of the above claims when these instructions are executed by an electronic computer.

11. Method for sending a first scrambled multimedia content, the viewing of which is conditional on the prior viewing of scrambled second multimedia contents, these second multimedia contents being the only contents to be associated with access control messages containing a cryptogram of a control word to decramble them and instructions on progression of the value of a same counter of an electronic receiver of the first and second multimedia contents, these instructions on progression modifying all the value of this same counter in the same sense when they are executed by the electronic receiver, **characterized in that** this method comprises:
- the sending (86) of the access control messages associated with each second multimedia content sent,
- the sending (86), between two second multimedia contents, of other multimedia contents not associated with access control messages containing instructions for modifying the value of this counter, and
- the sending (86) of conditions of access associated with the first multimedia contents sent, these conditions of access making the viewing of the first multimedia content conditional on a predetermined value of the counter.

12. Method according to claim 11, wherein the method comprises the sending (86) of instructions on regression of the value of the counter associated with the first multimedia content sent, these instructions on regression being capable of increasing the difference between the value of a same counter and said predetermined value when the viewing of the first multimedia content is authorized.

13. Receiver of a first scrambled multimedia content, the viewing of which is conditional on the prior viewing of scrambled second multimedia contents, these second multimedia contents being the only contents to be associated with access control messages containing a cryptogram of a control word to descramble them and instructions on the progression of the value of a same counter, these instructions on progression modifying all the value of this same counter in the same sense when they are executed by the electronic receiver of the first and second multimedia contents, **characterized in that** the receiver comprises:
- a memory capable of storing the value of the counter between non-consecutive viewings of second multimedia contents interspersed with the viewing of another multimedia content that does not modify the value of the counter, and
- an electronic computer (52) capable of:
• modifying the value of the counter as a function of the instructions on progression associated with the second multimedia contents received whenever a second multimedia content is viewed by means of the receiver, and
• making the viewing of the first multimedia content conditional on a predetermined value of the counter.
• whenever the viewing of the first multimedia content by means of the electronic receiver is authorized, modifying the value of the counter in a sense opposite to that of the instructions on progression.

14. Security processor capable of being implemented in a receiver compliant with claim 13, **characterized in that** this security processor comprises an electronic computer (50) capable of :
• modifying the value of the counter as a function of the instructions on progression associated with the second multimedia contents received whenever a second multimedia content is viewed by means of the receiver, and
• making the viewing of the first multimedia content conditional on a predetermined value of the counter.
• whenever the viewing of the first multimedia content by means of the electronic receiver is authorized, modifying the value of the counter in a sense opposite to that of the instructions on progression.

15. Sender of a first scrambled multimedia content, the viewing of which is conditional on the prior viewing of scrambled second multimedia contents, these second multimedia contents being the only contents to be associated with access control messages containing a cryptogram of a control word to descramble them and instructions on progression of the value of a same counter of an electronic receiver of the first and second multimedia contents, these instructions on progression modifying all the value of this same counter in the same sense when they are executed by the electronic receiver of the first and second multimedia contents, **characterized in that** the sender (4) is capable of:
- sending access control messages associated with each multimedia content sent,
- sending, between two second multimedia contents, other multimedia contents not associated with control access message containing instructions on progression of the value of this counter, and
- sending conditions of access associated with the first multimedia content sent, these conditions of access making the viewing of the first multimedia content conditional on a predetermined value of the counter.

## Patentansprüche

1. Empfangsverfahren eines ersten verschlüsselten Multimedien-Inhalts, dessen Anzeige der vorherigen Anzeige von zweiten verschlüsselten Multimedien-Inhalten unterworfen ist, wobei diese zweiten Multimedien-Inhalte die einzigen sind, die Zugangskontrollmeldungen zugeordnet sind, die ein Kryptogramm eines Kontrollwortes enthalten, um sie zu entschlüsseln, und Progressionsanweisungen des Wertes eines und desselben Zählers, wobei diese Progressionsanweisungen alle Werte dieses einen und desselben Zählers in derselben Richtung ändern, wenn sie durch einen elektronischen Empfänger der ersten und zweiten Multimedien-Inhalte ausgeführt werden, **dadurch gekennzeichnet, dass** das Verfahren umfasst:
- die Änderung (114) des Wertes des Zählers in Abhängigkeit von den diesem zweiten Multimedien-Inhalt zugeordneten Progressionsanweisungen jedes Mal, wenn ein zweiter Multimedien-Inhalt mithilfe des elektronischen Empfängers angezeigt wird,
- die Speicherung (114) des Wertes dieses Zählers zwischen den nicht konsekutiven Anzeigen von zweiten Multimedien-Inhalten, die durch die Anzeige eines anderen Multimedien-Inhaltes unterbrochen werden, die den Wert des Zählers nicht ändern,
- die Unterwerfung (118; 98) der Anzeige des ersten Multimedien-Inhaltes unter einen Vorbestimmten Wert des Zählers; und
- jedes Mal, wenn die Anzeige des ersten Multimedien-Inhaltes mithilfe des elektronischen Empfängers zugelassen wird, umfasst das Verfahren die Änderung (120; 164) des Wertes des Zählers in einer den Progressionsanweisungen entgegengesetzten Richtung.

2. Verfahren gemäß Anspruch 1, in dem vor der Anzeige jedes zweiten Multimedien-Inhalts das Verfahren die Demultiplexierung (92) eines empfangenen multiplexierten Datenflusses umfasst, der den zweiten multiplexierten Multimedien-Inhalt mit den Progressionsanweisungen enthält und in dem die Änderung des Wertes des Zählers von den mit dem zweiten Multimedien-Inhalt multiplexierten Progressionsanweisungen abhängt.

3. Verfahren gemäß einem der vorherigen Ansprüche, in dem das Verfahren die Auswahl (112) des Zählers umfasst, dessen Wert aus mehreren möglichen Zählern in Abhängigkeit von einer Kennung dieses den Progressionsanweisungen zugeordneten Zählers abgeändert werden muss.

4. Verfahren gemäß einem der vorherigen Ansprüche, in dem das Verfahren umfasst:
- den Empfang (92) einer Gruppe aus einer oder mehreren Kryptoperiode(n) des zweiten Multimedien-Inhaltes und dieser Gruppe zugeordneten Progressionsanweisungen, wobei jede Kryptoperiode des zweiten Multimedien-Inhaltes mit einem jeweiligen Kontrollwort verschlüsselt ist und
- die Änderung (114) des Wertes des Zählers jedes Mal, wenn alle Kryptoperioden dieser Gruppe durch den elektronischen Empfänger verschlüsselt sind.

5. Verfahren gemäß Anspruch 4, in dem das Verfahren vor einer Kryptoperiode des zweiten Multimedien-Inhalts den Empfang (92) einer Nachricht umfasst, die gleichzeitig an alle Empfänger ausgestrahlt wird, die geeignet sind, die ersten und zweiten Multimedien-Inhalte zu empfangen, wobei diese Meldung ein Kryptogramm CW* des Kontrollwortes beinhaltet, das zur Entschlüsselung dieser Kryptoperiode notwendig ist, und die Progressionsanweisungen, die der Gruppe zugeordnet sind, zu denen diese Kryptoperioden gehören.

6. Verfahren gemäß einem der vorherigen Ansprüche, in dem das Verfahren umfasst:
- den Empfang (92) einer Gruppe aus einer oder mehreren Kryptoperiode(n) des ersten Multimedien-Inhaltes und Regressionsanweisungen des Wertes des dieser Gruppe zugeordneten Zählers, wobei jede Kryptoperiode mit einem jeweiligen Kontrollwort verschlüsselt ist;
- jedes Mal, wenn alle Kryptoperioden der Gruppe entschlüsselt sind, die Änderung (120) des Wertes des Zählers in Abhängigkeit der dieser Gruppe in einer umgekehrten Richtung zu den Progressionsanweisungen zugeordneten Regressionsanweisungen, und
- Verbot (96) des Entschlüsselns einer nächsten Gruppe von Kryptoperioden des ersten Multimedien-Inhaltes, sobald der Wert des Zählers einen Vorbestimmten Schwellenwert erreicht.

7. Verfahren gemäß einem der vorherigen Ansprüche, in dem das Verfahren umfasst:
- den Empfang (92) des ersten verschlüsselten Multimedien-Inhaltes und der ersten Zugangsbedingungen zu diesem ersten Multimedien-Inhalt,
- das Verbot (98, 96) des Entschlüsselns des ersten Multimedien-Inhaltes, wenn kein Zugangstitel, der den Zugangsbedingungen entspricht, in den elektronischen Empfänger eingetragen ist, und im Gegenteil
- die Erlaubnis (98) der Entschlüsselung des ersten Multimedien-Inhaltes, wenn ein Zugangstitel, der den Zugangsbedingungen zu diesem ersten Multimedien-Inhalt entspricht, in den elektronischen Empfänger eingetragen ist, und
- die Eintragung (164) eines den Zugangsbedingungen entsprechenden Zugangstitels in den Empfänger, sobald der Wert des Zählers einen Vorbestimmten Schwellenwert überschritten hat.

8. Verfahren gemäß einem der vorherigen Ansprüche, in dem das Verfahren die Begrenzung des Wertes des Zählers auf einen Vorbestimmten Schwellenwert umfasst.

9. Verfahren gemäß einem der vorherigen Ansprüche, in dem das Verfahren die automatische Erstellung (108) des Zählers als Antwort auf den Empfang von Progressionsanweisungen des Wertes dieses Zählers umfasst.

10. Informationsspeicherträger, **dadurch gekennzeichnet, dass** er Anweisungen für die Ausführung eines Empfangsverfahrens gemäß einem der vorherigen Ansprüche umfasst, wenn diese Anweisungen durch einen elektronischen Rechner ausgeführt werden.

11. Sendeverfahren eines ersten verschlüsselten Multimedien-Inhalts, dessen Anzeige der vorherigen Anzeige von zweiten verschlüsselten Multimedien untergeordnet ist, wobei diese zweiten Multimedien die einzigen sind, die den Zugangskontrollmeldungen zugeordnet sind, die ein Kryptogramm eines Kontrollwortes enthalten, um sie zu entschlüsseln, und Progressionsanweisungen des Wertes eines und desselben Zählers eines elektronischen Empfängers der ersten und zweiten Multimedien-Inhalte, wobei diese Progressionsanweisungen alle den Wert dieses selben Zählers in derselben Richtung ändern, wenn sie durch den elektronischen Empfänger ausgeführt werden, **dadurch gekennzeichnet, dass** das Verfahren umfasst:
- das Senden (86) der Zugangskontrollmeldungen, die jedem zweiten ausgegebenen Multimedieninhalt zugeordnet sind,
- die Ausgabe (86) von nicht den Zugangskontrollmeldungen, die Änderungsanweisungen des Wertes dieses Zählers enthalten, zugeordneten anderen Multimedieninhalten zwischen zwei zweiten Multimedieninhalten, und
- die Ausgabe (86) von Zugangsbedingungen, die dem ersten ausgegebenen Multimedien-Inhalt zugeordnet sind, wobei diese Zugangsbedingungen die Anzeige des ersten Multimedien-Inhaltes zu einem Vorbestimmten Wert des Zählers bedingen.

12. Verfahren gemäß Anspruch 11, in dem das Verfahren die Ausgabe (86) von Regressionsanweisungen des Wertes des Zählers umfasst, die dem ersten ausgegebenen Multimedien-Inhalt zugeordnet sind, wobei diese Regressionsanweisungen geeignet sind, die Abweichung zwischen dem Wert desselben Zählers und dem genannten Vorbestimmten Wert zu erhöhen, wenn die Anzeige des ersten Multimedien-Inhaltes zugelassen wird.

13. Empfänger eines ersten verschlüsselten Multimedien-Inhaltes, dessen Anzeige der vorherigen Anzeige von zweiten verschlüsselten Multimedien-Inhalten unterworfen ist, wobei diese zweiten Multimedien-Inhalte die einzigen sind, die Zugangskontrollmeldungen zugeordnet sind, die ein Kryptogramm eines Kontrollwortes enthalten, um sie zu entschlüsseln, und Progressionsanweisungen des Wertes eines und desselben Zählers, wobei diese Progressionsanleitungen alle den Wert dieses selben Zählers in derselben Richtung ändern, wenn sie vom elektronischen Empfänger der ersten und zweiten Multimedia-Inhalte ausgeführt werden, **dadurch gekennzeichnet, dass** der Empfänger umfasst:
- einen Speicher (52), der geeignet ist, den Wert des Zählers zwischen den nicht konsekutiven Anzeigen der zweiten Multimedien-Inhalte, die durch die Anzeige eines anderen, den Wert des Zählers nicht ändernden Multimedien-Inhaltes unterbrochen werden, zu speichern, und
- einen elektronischen Rechner (50), der geeignet ist:
* zur Änderung des Wertes des Zählers in Abhängigkeit der Progressionsanweisungen, die den zweiten Multimedien-Inhalten zugeordnet sind, die jedes Mal erhalten werden, wenn ein zweiter Multimedien-Inhalt mithilfe dieses Empfängers angezeigt wird,
* zur Unterwerfung der Anzeige des ersten Multimedien-Inhaltes unter einen Vorbestimmten Wert des Zählers, und
* jedes Mal, wenn die Anzeige des ersten Multimedien-Inhaltes mithilfe des elektronischen Empfängers zugelassen wird, zur Änderung des Wertes des Zählers in einer den Progressionsanweisungen entgegengesetzten Richtung.

14. Sicherheitsprozessor, der geeignet ist, in einem Empfänger gemäß Anspruch 13 umgesetzt zu werden, **dadurch gekennzeichnet, dass** der Sicherheitsprozessor einen elektronischen Rechner (50) umfasst, der geeignet ist:
* zur Änderung des Wertes des Zählers in Abhängigkeit der Progressionsanweisungen, die den zweiten Multimedien-Inhalten zugeordnet sind, die jedes Mal erhalten werden, wenn ein zweiter Multimedien-Inhalt mithilfe dieses Empfängers angezeigt wird,
* zur Unterwerfung der Anzeige des ersten Multimedien-Inhaltes unter einen Vorbestimmten Wert des Zählers, und
* jedes Mal, wenn die Anzeige des ersten Multimedien-Inhaltes mithilfe des elektronischen Empfängers zugelassen wird, zur Änderung des Wertes des Zählers in einer den Progressionsanweisungen entgegengesetzten Richtung.

15. Sender eines ersten verschlüsselten Multimedien-Inhaltes, dessen Anzeige der vorherigen Anzeige von zweiten verschlüsselten Multimedien-Inhalten unterworfen ist, wobei diese zweiten Multimedien-Inhalte die einzigen sind, die Zugangskontrollmeldungen zugeordnet werden, die ein Kryptogramm eines Kontrollwortes enthalten, um sie zu entschlüsseln, und Progressionsanweisungen des Wertes eines und desselben Zählers eines elektronischen Empfängers der ersten und zweiten Multimedien-Inhalte, wobei diese Progressionsanweisungen alle den Wert dieses selben Zählers in derselben Richtung ändern, wenn sie vom elektronischen Zähler ausgeführt werden, **dadurch gekennzeichnet, dass** der Sender (4) geeignet ist:
- Zugangskontrollmeldungen auszugeben, die jedem zweiten ausgegebenen Multimedien-Inhalt zugeordnet sind,
- zwischen zwei zweiten Multimedien-Inhalten andere Multimedien-Inhalte auszugeben, die keinen Zugangskontrollmeldungen zugeordnet sind, die Progressionsanweisungen des Wertes dieses Zählers enthalten, und
- Zugangsbedingungen auszugeben, die dem ersten ausgegebenen Multimedien-Inhalt zugeordnet sind, wobei diese Zugangsbedingungen die Anzeige des ersten Multimedien-Inhaltes einem Vorbestimmten Wert des Zählers unterwerfen.
